# EUROPÄISCHE PATENTSCHRIFT

(11) **EP 2 905 126 B1**
(45) Veröffentlichungstag und Bekanntmachung des Hinweises auf die Patenterteilung: **04.03.2020**
(21) Anmeldenummer: 15153041.7
(22) Anmeldetag: 29.01.2015
(51) Int. Cl.: B30B 15/32, B27N 3/22, B27N 7/00, B30B 15/30

(54) **Beschickvorrichtung**
Feeding device
Dispositif de chargement

(30) Priorität: 07.02.2014 DE 102014101520
(43) Veröffentlichungstag der Anmeldung: 12.08.2015
(73) Patentinhaber: Siempelkamp Maschinen- und Anlagenbau GmbH, 47803 Krefeld (DE)
(72) Erfinder: Weiss, Horst, 47669 Wachtendonk (DE); Schürmann, Klaus, 41363 Jüchen (DE)
(74) Vertreter: von dem Borne, Andreas

(56) Entgegenhaltungen:
- EP-A1- 0 908 282
- DE-A1- 10 335 029
- DE-B1- 2 363 760
- DE-C2- 4 313 012
- US-A- 3 909 343

## Beschreibung

Die Erfindung betrifft eine Transportvorrichtung zum Beschicken und/oder Entleeren einer Plattenpresse mit einem zu verpressenden Pressgutstapel oder einer gepressten Pressplatte, mit auf oder an Führungsschienen in Transportrichtung verfahrbaren Transportholmen, zwischen denen ein Pressgutstapel/ Pressplatte positioniert oder positionierbar ist und mit an den Transportholmen über Traglenker befestigten Klemmeinrichtungen, wobei die Klemmeinrichtungen jeweils zwei Klemmbacken aufweisen, die zum Greifen eines Pressgutstapels bzw. der Pressplatte mittels eines Klemmantriebes zusammenfahrbar sind.

Bei der Transportvorrichtung kann es sich um eine Beschickvorrichtung zum Beschicken einer Plattenpresse mit zu verpressenden Pressgutstapeln oder um eine Entleervorrichtung zum Entleeren der Plattenpresse und folglich zum Entnehmen der gepressten Pressplatte aus der Plattenpresse handeln. Pressgutstapel meint einen Stapel aus mehreren Pressgutlagen, z. B. Papieren, Folien und/oder Holzwerkstoffplatten, die dann in einer Plattenpresse zu einer Platte verpresst werden. Bei der Presse handelt es sich um eine Taktpresse, vorzugsweise eine Einetagenpresse, wobei die vorkonfektionierten Pressstapel mit Hilfe der Beschickvorrichtung taktweise in die Presse eingeführt werden, dort zu einer Platte verpresst werden, welche dann mittels einer Entleervorrichtung aus der Presse entnommen wird. Mit einer solchen Presse können z.B. Laminatplatten verpresst werden, wobei die Pressstapel dann in der Regel aus einer oder mehreren Holzwerkstoffplatten sowie mehreren Vergütungsauflagen (Folien, Papieren oder dergleichen) zusammengesetzt sind. Ferner lassen sich mit einer solchen Presse Schichtstoffplatten, z. B. HPL-Schichtstoffplatten (High Pressure Laminate) und bevorzugt auch Kompaktplatten herstellen. In diesem Fall besteht ein Pressgutstapel aus einer Vielzahl von Papieren und/oder Folien, die unter hohem Druck zu einer Platte verpresst wird. Solche Platten, insbesondere Kompaktplatten und Schichtstoffplatten sind vielseitig einsetzbar, so dass das Bedürfnis besteht, diese kostengünstig mit hoher Geschwindigkeit und hoher Qualität herzustellen.

Aus der DE 43 13 012 C2 ist eine Beschickvorrichtung für eine Plattenpresse im Zuge der Herstellung von Dekorlaminatplatten oder Industrielaminatplatten bekannt, bei der an den Beschickholmen obere und untere Klemmleisten angeordnet sind. Die Laminatstapel sind in einer Übernahmeposition mit den Klemmleisten fassbar und in der Ablegeposition von den Klemmleisten freigebbar und in der Presse ablegbar. Die unteren Klemmleisten sind dabei mit Hilfe von vertikal arbeitenden Stelltrieben auf- und niederbewegbar und auf unterschiedliches Klemmniveau einstellbar. Die oberen Klemmleisten sind mit Hilfe von Parallelogrammlenkern, auf welche Stelltriebe arbeiten, zu betätigen und durch diese auf jedes Klemmniveau der unteren Klemmleisten einstellbar.

Die DE 2 217 396 C3 beschreibt eine Beschick- und Entleervorrichtung von Plattenpressen mit verfahrbaren Transportholmen, die aus einem Einfahrabschnitt und einem Entnahmeabschnitt bestehen und mit Einfahrklemmleisten als Pressgutaufnahme und mit Entnahmeklemmleisten als Entnahmeeinrichtung ausgerüstet sind. Zum Betätigen dieser Klemmvorrichtung dienen Zylinderkolbenanordnungen. Dabei ist die Anordnung so getroffen, dass die Einfahrklemmleisten und die Entnahmeklemmleisten in Längsrandausnehmungen der mit entsprechenden Vorsprüngen versehenen Pressenplatten einfassen.

Bei der aus der DE 22 09 901 bekannten Beschickvorrichtung für eine Plattenpresse sind ebenfalls Klemmleistenpaare an die Beschickholme schwenbkar angeschlossen und nach Aufnahme des Pressgutes aus einer horizontalen in eine schräg nach oben weisende Stellung schwenkbar. Zum Ablegen des Pressgutes sind die Klemmleistenpaare aus der gegen die horizontale schräg nach oben weisenden Stellung in eine schräg nach unten weisende Stellung absenkbar. Dazu können entsprechende Hebegetriebe mit Steuerkurven oder auch Zahnradgetriebe verwirklicht sein, die gleichzeitig mit der Schwenkbewegung das Öffnen und Schließen der Klemmleistenpaare bewirken. Eine Zylinderkolbenanordnung bewirkt die zusätzliche Ein- und Ausfahrbewegung. Aus der DE 25 21 663 C3 kennt man eine Beschickvorrichtung für eine Presse, bei welcher ein Pressgutstapel mit Hilfe von Tragvorrichtungen gehalten wird, wobei jede Tragvorrichtung mit einer Tragrolle für die Pressgutunterseite und einer auf der Pressgutoberseite anlegbaren Druckrolle versehen ist, wobei diese Rollen mit einer Hebelanordnung gehalten sind, so dass durch entsprechende Hebelanordnung im Zuge des Anhebens und Absenkens der Platte auch ein Öffnen und Schließen der Klemmanordnung realisiert wird.

Eine Beschickvorrichtung gemäß dem Oberbegriff des Anspruchs 1 ist z. B. aus der DE 28 47 273 A1 bekannt. An den Beschickholmen sind über entsprechende Traglenker in der Ausführungsform als Scherenarme Klemmleistenpaare angeordnet, die mit Hilfe von Zylinderkolbenanordnungen betätigbar sind.

In der Praxis werden für die Betätigung der Klemmeinrichtungen, z. B. Klemmleistenpaare, in der Regel Pneumatikzylinder eingesetzt, da diese verhältnismäßig kompakt ausgebildet sind, so dass sie ohne Weiteres an den in mehreren Dimensionen zu bewegenden Klemmleisten angeordnet werden können. Der Einsatz solcher Pneumatikzylinder hat sich in der Praxis gut bewährt.
Es besteht jedoch das Bedürfnis, Pressgutstapel aus einzelnen Lagen unterschiedlichster Ausgestaltung zu verpressen und insbesondere auch Pressgutstapel aus einer großen Anzahl einzelner Lagen zu verpressen, beispielsweise im Zuge der Herstellung von Kompaktplatten, Schichtstoffplatten oder dergleichen. Dabei bereitet in der Praxis häufig ein zu großer Durchhang des Pressgutstapels im Zuge des Beschickens Probleme, denn der Pressgutstapel muss mit der Beschickvorrichtung in den geöffneten Pressenraum eingeführt werden. Da der Bauraum dort begrenzt ist und ein weiteres Öffnen der Presse mit erheblichem baulichen Mehraufwand verbunden wäre, besteht das Bedürfnis, den Pressgutstapel im Zuge des Beschickens mit möglichst geringem Durchhang zu transportieren. Insbesondere bei Pressgutstapeln aus einer Vielzahl von Papieren oder dergleichen ist dieses mit den herkömmlichen Anlagen nicht mehr ohne Weiteres möglich. Ähnliche Probleme können sich beim Entleeren der Presse ergeben.

Im Übrigen kennt man aus der DE 23 63 760 B1 eine Vorrichtung zum Beschicken von Plattenpressen, bei welcher an Beschickholmen-Klemmeinrichtungen aus Aufklemmbacken und Druckklemmbacken angeordnet sind, wobei die Klemmeinrichtungen das Pressgut an den beiden Längsrändern erfassen und in die geöffnete Plattenpresse einfahren. Dabei sind die Klemmeinrichtungen, wenn sie das Pressgut erfasst haben, insgesamt nach außen hin ausschwenkbar, so dass auf das Pressgut auch quer zur Beschickrichtung Spannkräfte ausgeübt werden können.

Der Erfindung liegt die Aufgabe zugrunde, eine Transportvorrichtung, z. B. Beschickvorrichtung zum Beschicken einer Plattenpresse der eingangs beschriebenen Art zu schaffen, mit welcher sich bei einfachem Aufbau Pressgutstapel/Pressplatten mit geringem Durchhang schnell transportieren lassen.

Zur Lösung dieser Aufgabe lehrt die Erfindung eine Transportvorrichtung mit den Merkmalen des Anspruchs 1. Diese Erfindung aufweist eine Transportvorrichtung, z. B.

Beschickvorrichtung zum Beschicken einer Plattenpresse mit einem zu verpressenden Pressgutstapel, mit auf oder an Führungsschienen in Transportrichtung verfahren Transportholmen, zwischen denen z.B. ein Übernahmetisch angeordnet ist, auf dem ein Pressgutstapel positioniert oder positionierbar ist und mit an den Transportholmen über Traglenker befestigten Klemmeinrichtungen,
wobei die Klemmeinrichtungen jeweils zwei Klemmbacken aufweisen, die zum Greifen eines Pressgutstapels/einer Pressplatte mittels eines Klemmantriebes zusammenfahrbar sind, wobei die beidseitig des Pressgutstapels/der Pressplatte angeordneten Klemmeinrichtungen mit den Traglenkern und daran angeschlossenen Querantrieben zum Aufnahmen des Pressgutstapels/Pressplatte zusammenfahrbar und zum Spannen des Pressgutstapels/Pressplatte quer zur Transportrichtung auseinanderfahrbar sind und
wobei die Klemmantriebe als hydraulische Klemmzylinderantriebe ausgebildet sind,
wobei jeweils mehrere Klemmeinrichtungen an einer Klemmleiste angeordnet sind, welche sich entlang der Transportrichtung erstreckt und an die Traglenker angeschlossen ist,
wobei in die Klemmleiste Hydraulikzuführungen für die Klemmantriebe integriert sind.

Die Erfindung geht dabei von der Erkenntnis aus, dass dem Spannen des Pressgutstapels (oder auch einer Pressplatte) in der quer zur Transportrichtung verlaufenden Querrichtung besondere Bedeutung zukommt, um einen Transport mit minimalem Durchhang zu gewährleisten. Daher werden die aufgenommenen Pressgutstapel durch ein Auseinanderfahren der Klemmeinrichtungen mit Hilfe geeigneter Querantriebe gespannt, um den Durchhang zu minimieren. Um im Zuge des Aufbringens hoher Spannkräfte in Querrichtung dennoch zu gewährleisten, dass der Pressgutstapel einwandfrei zwischen den Klemmbacken fixiert wird, werden die Klemmantriebe erfindungsgemäß als hydraulische Klemmzylinderantriebe ausgebildet. Auf die bislang als Klemmantriebe eingesetzten Pneumatikzylinder wird erfindungsgemäß verzichtet, denn mit hydraulischen Klemmzylinderantrieben lassen sich wesentlich höhere Klemmkräfte aufbringen, so dass dann wiederum mit Hilfe der Querantriebe hohe Spannkräfte aufgebracht werden können, ohne dass sich der Pressgutstapel zwischen den Klemmbacken löst. Mit der erfindungsgemäßen Beschickvorrichtung lassen sich daher auch Pressgutstapel verarbeiten, die aus einer Vielzahl von Lagen, z.B. Papieren, Folien oder dergleichen bestehen, ohne dass ein übermäßiger Durchhang in Kauf genommen werden muss, und zwar auch dann, wenn der Stapel keine Trägerplatte enthält. Die Dicke eines solchen Stapels kann mehr als 20 mm, z.B. bis zu etwa 40 mm betragen. So lassen sich mit der erfindungsgemäßen Beschickvorrichtung z. B. auch Pressgutstapel für die Herstellung von Kompaktplatten verarbeiten, wobei solche Pressgutstapel aus einer Vielzahl von Kraftpapieren, sowie gegebenenfalls oberseitig und/oder unterseitig Dekorpapier und/oder Overlay bestehen. Ein solcher Pressgutstapel kann sich z.B. aus mehr als zehn Lagen, vorzugsweise als dreißig Lagen zusammensetzen. Mit der erfindungsgemäßen Beschickvorrichtung lassen sich aber auch Pressgutstapel aus anderen Materialien hervorragend verarbeiten. Besonders vorteilhaft ist die Tatsache, dass die der Beschickvorrichtung nachgeschaltete Presse hinsichtlich ihrer Öffnungsweite nicht modifiziert werden muss, denn durch Minimierung des Durchhangs des Pressgutstapels lassen sich die Pressgutstapel auch bei geringer Öffnungsweite der Presse einwandfrei einführen. Vorteilhaft ist dabei auch die Tatsache, dass im Zuge des Einführens aufgrund des geringen Durchhangs Berührungen des Pressgutstapels mit den (heißen) Pressenplatten vermieden werden. Die gleichen Vorteile lassen sich auch bei einer entsprechenden Entleervorrichtung erreichen, mit welcher eine gepresste Pressgutplatte aus der Presse entnommen und hinter der Presse abgelegt wird.

Vorteilhafte Weiterbildungen der Erfindung werden im Folgenden erläutert:
Erfindungsgemäß sind jeweils mehrere Klemmeinrichtungen an einer Klemmleiste angeordnet, welche sich entlang der Transportrichtung und im Wesentlichen über die Länge des zu verarbeitenden Pressgutes erstreckt, wobei diese Klemmleiste an die beschriebenen Traglenker angeschlossen sind. Es sind folglich beidseitig des Pressgutstapels jeweils zumindest eine Klemmleiste angeordnet, wobei diese Klemmleisten dann mit Hilfe der Traglenker zusammenfahrbar und auseinanderfahrbar sind. Grundsätzlich können auf jeder Seite jeweils eine obere Klemmleiste und eine untere Klemmleiste angeordnet sein, die dann zum Greifen der Pressgutstapel gegeneinander gefahren werden, so dass die Klemmeinrichtungen dann von solchen Klemmleistenpaaren gebildet werden. Besonders bevorzugt werden jedoch Klemmeinrichtungen vorgesehen, die jeweils eine an der Klemmleiste beweglich angelenkte und von den Klemmzylinderantrieb betätigbare aktive Klemmbacke und eine an der Klemmleiste befestigte passive Klemmbacke aufweisen. Die Klemmleiste trägt bei dieser Ausführungsform folglich eine Vielzahl von Klemmeinrichtungen, die sich jeweils aus Klemmbackenpaaren zusammensetzen, wobei die passive Klemmbacke auch von der Klemmleiste selbst gebildet werden kann.

Dabei ist es zweckmäßig, wenn eine oder mehrere Klemmbacken drehbar gelagerte Klemmrollen aufweisen. So schlägt die Erfindung bevorzugt vor, dass die aktive Klemmbacke eine drehbar gelagerte Klemmrolle aufweist. Die passive Klemmbacke kann dann auch ohne Klemmrolle realisiert werden und z.B. als Klemmfläche an der Klemmleiste befestigt sein. Dabei ist es zweckmäßig, eine schräg zur Horizontalen ausgerichtete Klemmfläche zu verwenden, die quer zur Transportrichtung abfällt. Durch diese Maßnahmen lässt sich in Kombination mit den hydraulischen Klemmzylindern eine hohe Klemmung realisieren, die dann wiederum ein einwandfreies Spannen der Pressgutstapel mit hohen Spannkräften ermöglicht. Zugleich werden Beschädigungen des Pressguts oder der Pressplatte beim Aufbringen hoher Klemmkräfte vermieden.

Die (aktiven) Klemmbacken können jeweils ein oder mehrere Halteschwingen aufweisen, die schwenkbar gelagert sind und an die die Klemmzylinderantriebe angeschlossen sind. Sofern z.B. mit Klemmrollen gearbeitet wird, können diese Klemmrollen drehbar zwischen zwei Halteschwingen gelagert sein und der Klemmzylinderantrieb hebt und senkt dann die Halteschwingen zum Aufbringen der Klemmkräfte. Dazu können die Halteschwingen jeweils Kulissenführungen, z.B. Langlochführungen aufweisen, in denen das Kolbenende bzw. ein am Kolbenende befestigter Lagerkörper geführt ist. Bei einer solchen Ausgestaltung mit Kulissenführungen können die Zylindergehäuse der Klemmzylinder fest an der jeweiligen Klemmleiste montiert sein. Alternativ besteht jedoch auch die Möglichkeit, die Zylindergehäuse drehbar bzw. schwenkbar an der Klemmleiste zu befestigen, so dass dann lediglich eine drehbare bzw. schwenkbare Anlenkung der Kolbenstange an der aktiven Klemmbacke erforderlich ist, ohne dass dann Kulissenführungen notwendig sind.

Die Geometrie kann dabei so ausgelegt sein, dass die aktive Klemmbacke im Zuge des Ausfahrens des Kolbens gegen die passive Klemmbacke drückt, so dass gegebenenfalls mit einfach wirkenden Hydraulikzylindern gearbeitet werden kann. Besonders bevorzugt sind die Klemmzylinderantriebe jedoch als doppelt wirkende Differenzialzylinder ausgebildet, so dass die Klemmbackenpaare aktiv geöffnet und geschlossen werden können. Dann besteht insbesondere auch die Möglichkeit, die aktive Klemmbacke im Zuge des Einfahrens des Kolbens zum Zwecke des Schließens des Klemmbackenpaares zu betätigen.

Die Erfindung hat insgesamt erkannt, dass sich entgegen der in der Fachwelt bestehenden Vorurteilen Hydraulikzylinder in vorteilhafter Weise auch im Bereich der verfahrbaren Klemmaggregate einsetzen lassen. Dazu ist es vorgesehen, die Hydraulikzuführungen für die einzelnen hydraulischen Klemmzylinderantriebe in die Klemmleiste zu integrieren, z.B. als Bohrungen. In bevorzugter Ausgestaltung wird folglich im Bereich der Klemmleiste auf flexible Hydraulikleitungen weitestgehend verzichtet. Durch die Klemmleiste erstreckt sich in Klemmleistenlängsrichtung zumindest ein Hydraulikkanal, der z.B. als Tieflochbohrung in die Klemmleiste eingebracht werden kann und sich über einen Teil oder über die gesamte Länge oder nahezu die gesamte Länge der Klemmleiste erstreckt. Mit dem Kanal lassen sich mehrere oder sämtliche Klemmaggregate einer Klemmleiste beaufschlagen lassen. Alternativ können mehrere Kanäle, z.B. von beiden Enden der Klemmleiste eingebracht werden, die jeweils mehrere Klemmaggregate gemeinsam beaufschlagen. Von den sich in Klemmleistenlängsrichtung erstreckenden Zuführkanälen zweigen dann entsprechende Zuführkanäle quer zur Klemmleistenlängsrichtung ab, die ebenfalls als Bohrungen ausgebildet sein können.

Der Querantrieb, der zum Einfahren und Ausfahren der Klemmleisten und folglich zum Zusammenfahren und Auseinanderfahren der beiden gegenüberliegenden Klemmleisten dient, ist bevorzugt als elektromechanischer Antrieb ausgebildet. Dabei liegt es im Rahmen der Erfindung, dass dieser Querantrieb, der auf den Beschick- oder Entleerholmen angeordnet ist, selbst entlang der Transportrichtung arbeitet und als Linearantrieb ausgebildet ist, der jedoch über ein Hebelgetriebe in Querrichtung auf die Traglenker arbeitet. Auf diese Weise lässt sich ein kompakter Aufbau realisieren und dennoch lassen sich hohe Kräfte zum Spannen des Pressgutstapels im Zuge des Auseinanderfahrens der Klemmleisten über die Traglenker realisieren. Dabei sind die Querantriebe derart ausgebildet, dass im Zuge des Auseinanderfahrens der Klemmleisten auf den Pressgutstapel eine ausreichende Zugkraft zur Vermeidung eines Durchhangs aufgebracht werden kann.

Zwischen den Beschickholmen ist in grundsätzlich bekannter Weise eine Übergabetisch für den Pressgutstapel angeordnet, wobei ein solcher Übergabetisch in der Regel mehrere entlang der Transportrichtung verlaufende Riemenbahnen sowie eine Tischplatte aufweist.

Die Klemmleiste ist bevorzugt aus Stahl gefertigt und besonders bevorzugt durch spanabhebende Bearbeitung mit Profilierungen und Ausnehmungen ausgebildet. Auf diese Weise lässt sich die Steifigkeit der Klemmleiste erhöhen.

Die im Rahmen dieser Anmeldung bevorzugt als Beschickvorrichtung bezeichnete Transportvorrichtung kann auch zum Entleeren einer Presse als Entleervorrichtung verwendet werden, wobei dann nicht ein Pressgutstapel, sondern eine verpresste Platte aus der Presse entnommen wird. Die erfindungsgemäße Transportvorrichtung kann folglich als Beschickvorrichtung oder als Entleervorrichtung eingesetzt werden. Die beschriebenen Optionen gelten jeweils für beide Ausführungsformen.

Im Übrigen liegt es im Rahmen der Erfindung, dass die Beschickvorrichtung baulich mit einer Entleervorrichtung kombiniert wird. So können die Transportholme in grundsätzlich bekannter Weise in einem ersten Abschnitt die Beschickholme bilden und in einem zweiten Abschnitt die Entleerholme bilden, so dass die Beschickholme und die Entleerholme synchron vor und zurückgefahren werden. An den Entleerholmen sind dann in grundsätzlich bekannter Weise entsprechende Aufnahme oder Abnahmevorrichtungen, z.B. Greifer, Saugleisten oder dergleichen angeordnet, mit denen sich die fertige Pressplatte aus der Presse entnehmen lässt. Wenn sich die Beschickvorrichtung folglich in der Aufnahmeposition vor der Presse befindet, befindet sich zugleich die Entleervorrichtung in der Presse, so dass dort eine fertige Platte aufgenommen werden kann. Fahren die Tragholme dann entlang der Transportrichtung, so wird die Beschickvorrichtung in die Presse eingefahren und zugleich werden die Entleerholme aus der Presse ausgefahren. Die bauliche Kombination von Beschickholmen einerseits und Entleerholmen andererseits ist grundsätzlich bekannt.

Im Folgenden wird die Erfindung anhand einer lediglich ein Ausführungsbeispiel darstellenden Zeichnung näher erläutert. Es zeigen
- Fig. 1: eine Pressenanlage mit einer Beschickvorrichtung in einer vereinfachten schematischen Darstellung,
- Fig. 2: eine erfindungsgemäße Beschickvorrichtung in einer Draufsicht,
- Fig. 3: einen Vertikalschnitt durch den Gegenstand nach Fig. 2 (Ausschnitt),
- Fig. 4: eine Klemmleiste mit Klemmeinrichtungen,
- Fig. 5: einen vergrößerten Ausschnitt aus dem Gegenstand nach Fig. 4 und
- Fig. 6: einen perspektivischen Schnitt durch eine Klemmleiste.

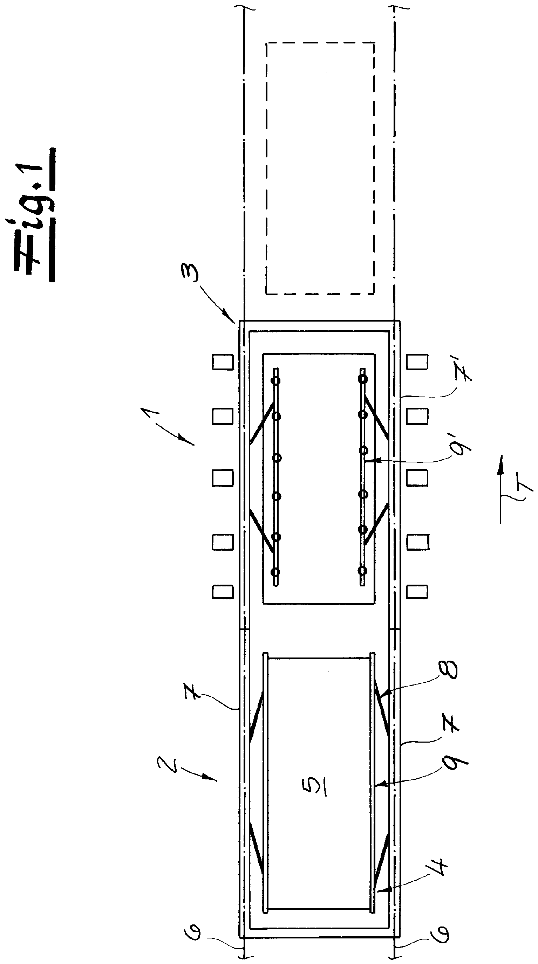

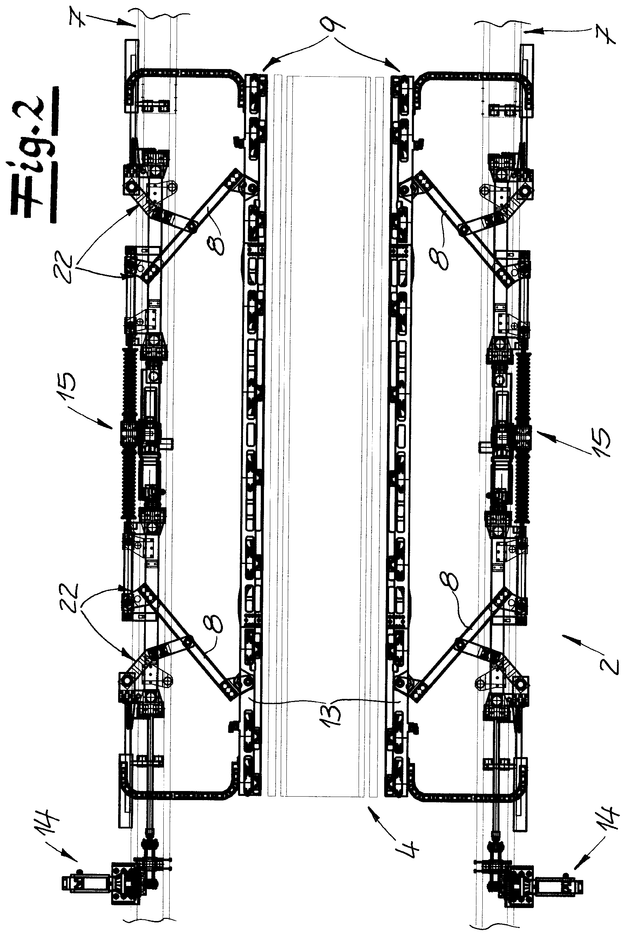

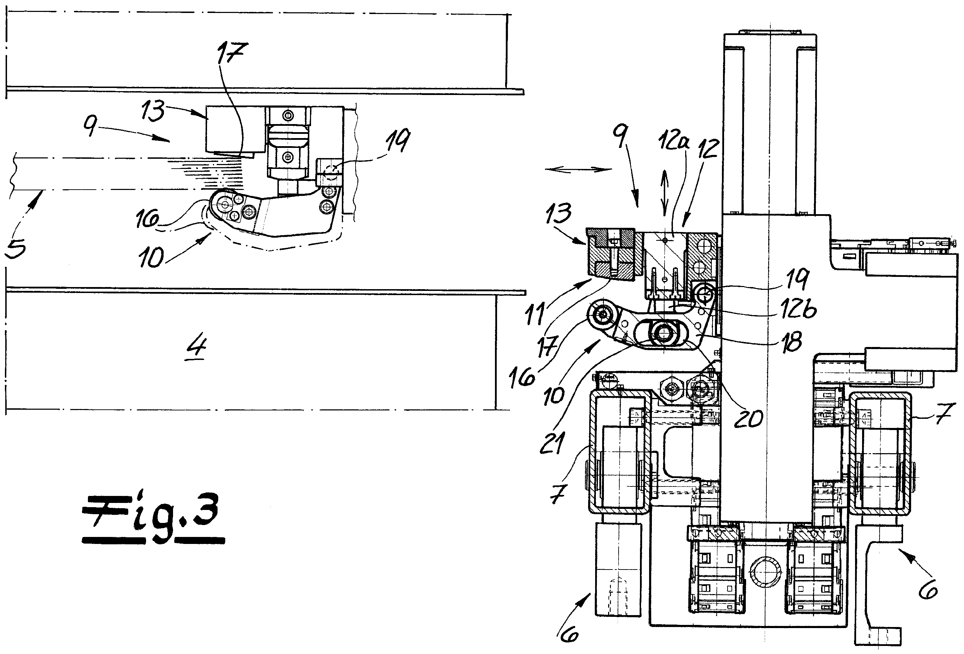

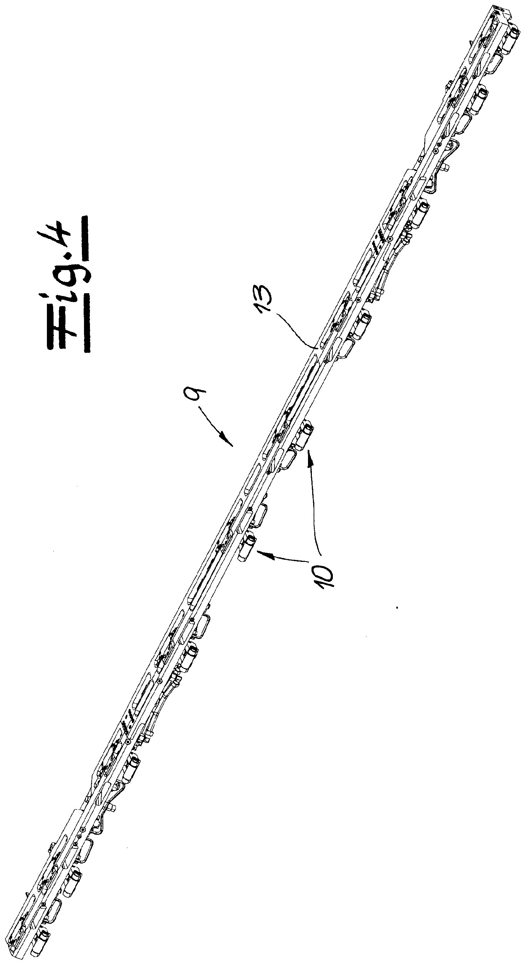

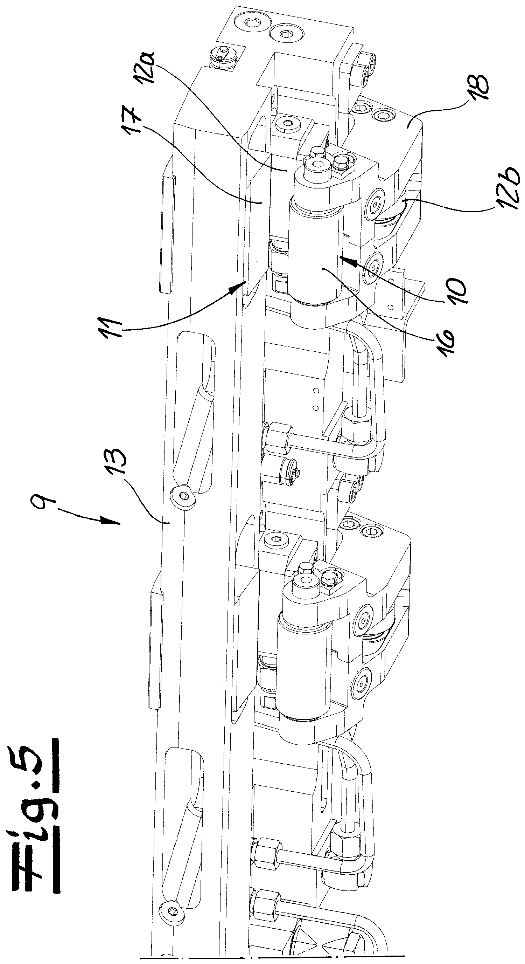

In Fig. 1 ist stark vereinfacht eine Pressenanlage für die Herstellung von Pressgutplatten, z.B. Laminatplatten, Schichtstoffplatten, Kompaktplatten oder dergleichen dargestellt. Im Zentrum des Bildes ist eine Plattenpresse 1 angedeutet, die z.B. als Einetagenpresse ausgebildet sein kann und in der ein Pressgutstapel aus einer Vielzahl von einzelnen Lagen zu einer Pressgutplatte verpresst wird, und zwar unter Anwendung von Druck und Wärme. In Transportrichtung T ist der Plattenpresse 1 eine Beschickvorrichtung 2 vorgeordnet und eine Entleervorrichtung 3 nachgeordnet. Mit der Beschickvorrichtung 2 wird ein auf einem angedeuteten Übergabetisch 4 angeordneter Pressgutstapel 5 aufgenommen und in die Plattenpresse 1 eingefahren. Mit der Entleervorrichtung 3 lässt sich dann die fertig gepresste Platte aus der Plattenpresse 1 entnehmen und hinter der Presse auf einem weiteren Tisch ablegen. Die Erfindung soll beispielhaft anhand der Beschickvorrichtung 2 erläutert werden, die in den Figuren 2 bis 6 näher dargestellt ist.

Die Beschickvorrichtung 2 weist zunächst einmal parallel zueinander angeordnete Führungsschienen 6 sowie in Transportrichtung auf bzw. an den Führungsschienen 6 verfahrbare Transportholme bzw. Beschickholme 7. Zwischen den Führungsschienen 6 bzw. Beschickholmen 7 ist der Übergabetisch 4 mit dem Pressgutstapel 5 angeordnet. An den Beschickholmen 7 sind über Traglenker 8 Klemmeinrichtungen 9 befestigt, mit denen sich der Pressgutstapel aufnehmen und in der Presse ablegen lässt.

Die Klemmeinrichtungen 9 weisen jeweils zwei Klemmbacken 10, 11 auf, die zum Greifen des Pressgutstapels mittels eines Klemmantriebes 12 zusammenfahrbar sind. In dem dargestellten Ausführungsbeispiel sind beidseitig des Pressgutstapels jeweils mehrere Klemmeinrichtungen 9 an einer gemeinsamen Klemmleiste 13 angeordnet. Diese Klemmleiste 13 ist an die Traglenker 8 angeschlossen, so dass sich die beiden Klemmleisten 13 zum Aufnehmen des Pressgutstapels zusammenfahren lassen. Erfindungsgemäß lassen sich nach dem Greifen des Pressgutstapels die beiden Klemmleisten 13 auseinanderfahren und damit der Pressgutstapel spannen, so dass der eventuelle Durchhang des Pressgutstapels minimiert wird.

Nach dem Aufnehmen des Pressgutstapels lassen sich die Beschickholme 2 mit Fahrantrieben 14 in Transportrichtung T verfahren, so dass der Pressgutstapel in die Presse 1 eingefahren wird. Im übrigen sind die Klemmleisten 13 aber nicht nur zusammenfahrbar und auseinanderfahrbar, sondern auch anhebbar und absenkbar. Einzelheiten sind jedoch nicht dargestellt.

Zum Zusammenfahren und Auseinanderfahren der Klemmleisten 13 sind Querantriebe 15 vorgesehen, die auf die Traglenker 8 und damit auf die Klemmleisten 13 arbeiten.

Die einzelnen Klemmeinrichtungen 9, die an der Klemmleiste 13 angeordnet sind, setzen sich jeweils aus einer aktiven Klemmbacke 10 und einer passiven Klemmbacke 11 zusammen. Die aktive Klemmbacke 10 ist beweglich an die Klemmleiste 13 angelenkt und von dem Klemmantrieb 12 betätigbar. Die passive Klemmbacke 11 ist fest an der Klemmleiste 13 befestigt. Erfindungsgemäß sind die Klemmantriebe als hydraulische Klemmzylinderantriebe 12 ausgebildet, mit denen sich sehr hohe Klemmkräfte aufbringen lassen. Zum Aufnehmen des Pressgutstapels werden folglich durch Betätigung der einzelnen hydraulischen Klemmantriebe 12 die aktiven Klemmbacken 10 gegen die passiven Klemmbacken gedrückt bzw. gezogen.

In den Figuren ist erkennbar, dass die aktive Klemmbacke 10 im Ausführungsbeispiel eine drehbar gelagerte Klemmrolle 16 aufweist. Die passive Klemmbacke 11 weist demgegenüber eine feste Klemmfläche 17 auf, die im Ausführungsbeispiel schräg zur horizontalen Ebene angeordnet ist und in Richtung zum Pressgutstapel hin abfällt. Die aktive Klemmbacke 10 weist darüber hinaus parallel zueinander angeordnete Halteschwingen 18 auf, die um eine Achse 19 schwenkbar bzw. drehbar gelagert sind. Die Klemmantriebe 12 sind mit ihren Kolben 12b gelenkig an diese Halteschwingen 18 angeschlossen. Die Zylindergehäuse 12a der Klemmantriebe 12 sind fest an die Klemmleisten 13 angeschlossen. Die Halteschwingen 18 weisen Kulissenführungen 20 auf, die im Ausführungsbeispiel als Langlöcher ausgebildet sind, und in welche Lagerzapfen 21 greifen, die endseitig an die Kolben 12b angeschlossen sind. Die Zylinderantriebe 12 sind dabei als doppelt wirkende Differenzialzylinder ausgebildet. Im Zuge des Ausfahrens des Kolbens 12b wird die untere Klemmbacke abgesenkt und folglich die Klemmeinrichtung geöffnet. Im Zuge des Einfahrens bzw. Zurückziehens des Kolbens 12b wird die Klemmbacke 10 angehoben und damit gegen die obere Klemmbacke 11 gezogen, und zwar unter Zwischenschaltung des Pressgutstapels.

Die Querantriebe 15 sind im Ausführungsbeispiel als elektromechanische Antriebe ausgebildet. Sie arbeiten entlang der Transportrichtung T und sind dabei als Linearantriebe ausgebildet, welche über Hebelgetriebe 22 auf die Traglenker 8 arbeiten, so dass die Arbeitsrichtung der Querantriebe entlang der Transportrichtung in eine Betätigungsrichtung quer zur Transportrichtung und folglich in Querrichtung umgelenkt wird.

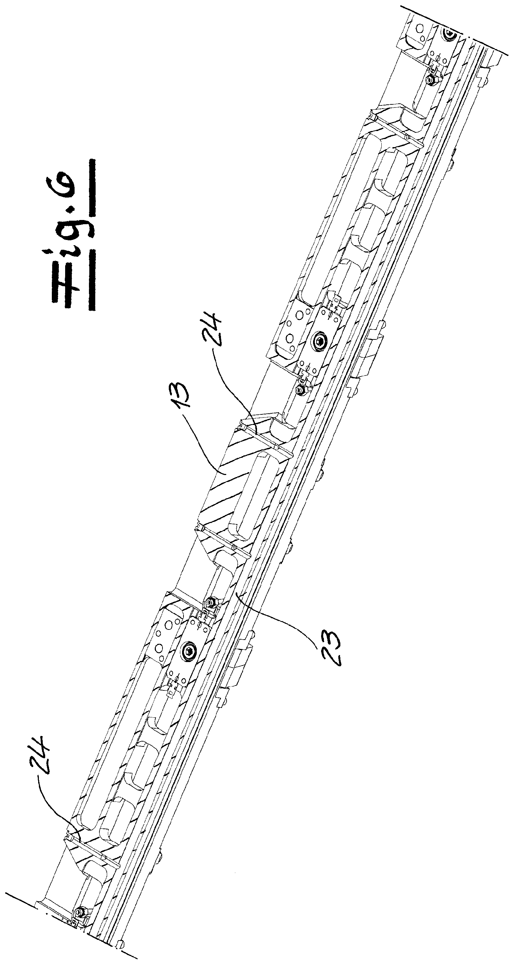

Von besonderer Bedeutung ist im Rahmen der Erfindung die Ausgestaltung der Klemmantriebe 12 als hydraulische Klemmzylinderantriebe. Diese müssen selbstverständlich mit Hydraulikmedium versorgt werden. Dazu sind erfindungsgemäss Hydraulikzuführungen für die Klemmantriebe in die Klemmleiste 13 integriert. In Fig. 6 ist erkennbar, dass dazu in die Klemmleiste Bohrungen 23, 24 integriert sind, welche die Hydraulikzuführungen bilden. Auf diese Weise kann auf flexible (externe) Hydraulikleitungen verzichtet werden. Dabei sind zum einen Zuführleitungen 23 erkennbar, die als Bohrungen in Klemmleistenlängsrichtung ausgebildet sind und zum anderen quer dazu verlaufende Zuführleitungen 24, die dann zu den einzelnen Klemmeinrichtungen führen.

Die Klemmleisten 13 sind im übrigen aus Stahl gefertigt, wobei durch spanabhebende Bearbeitung Profilierungen und Ausnehmungen eingebracht sind, um die Steifigkeit bei geringem Gewicht zu erhöhen.

Die in den Figuren dargestellten Beschickholme 7 sind im übrigen bevorzugt fest mit sich daran anschließenden Entleerholmen 7' verbunden, so dass Beschickvorrichtung 2 und Entleervorrichtung 3 baulich miteinander kombiniert sind. Befindet sich die Beschickvorrichtung im Bereich des aufzunehmenden Pressgutstapels, so befindet sich die Entleervorrichtung innerhalb der Presse. Wird dann die Beschickvorrichtung in die Presse gefahren, so wird automatisch die Entleervorrichtung mit Saugleisten 9' aus der Presse herausgefahren. Beschickvorrichtung und Entleervorrichtung werden folglich mit einem gemeinsamen Antrieb 14 synchron entlang der Transportrichtung T verfahren.

## Patentansprüche

1. Transportvorrichtung (2) zum Beschicken und/oder Entleeren einer Plattenpresse (1) mit einem zu verpressenden Pressgutstapel (5) oder einer gepressten Pressplatte,
mit auf oder an Führungsschienen (6) in Transportrichtung (T) verfahrbaren Transportholmen, zwischen denen ein Pressgutstapel oder eine Pressplatte positioniert oder positionierbar ist und
mit an den Transportholmen (7) über Traglenker (8) befestigten Klemmeinrichtung (9),
wobei die Klemmeinrichtung (9) jeweils zwei Klemmbacken (10, 11) aufweisen, die zum Greifen eines Pressgutstapels oder einer Pressplatte mittels eines Klemmantriebes (12) zusammenfahrbar sind,
wobei die beidseitig des Pressgutstapels oder der Pressplatte angeordnete Klemmeinrichtungen (9) mit den Traglenkern (8) und daran angeschlossenen Querantrieben (15) zum Aufnehmen des Pressgutstapels oder der Pressplatte zusammenfahrbar und zum Spannen des Pressgutstapels oder der Pressplatte quer zur Transportrichtung auseinander fahrbar sind und
wobei jeweils mehrere Klemmeinrichtungen (9) an einer Klemmleiste (13) angeordnet sind, welche sich entlang der Transportrichtung (T) erstreckt und an die Traglenker (8) angeschlossen ist,
**dadurch gekennzeichnet, dass** die Klemmantriebe (12) als hydraulische Klemmzylinderantriebe (12) ausgebildet sind und, dass in die Klemmleiste (13) Hydraulikzuführungen (23, 24) für die Klemmantriebe (12) integriert sind.

2. Transportvorrichtung nach Anspruch 1, **dadurch gekennzeichnet, dass** die Klemmeinrichtungen (9) jeweils eine an der Klemmleiste (13) beweglich angelenkte und von den Klemmzylinderantrieben (12) betätigbare aktive Klemmbacke (10) und eine an der Klemmleiste (13) befestigte passive Klemmbacke (11) aufweisen.

3. Transportvorrichtung nach Anspruch 2, **dadurch gekennzeichnet, dass** die aktive Klemmbacke (10) eine drehbar gelagerte Klemmrolle (16) aufweist.

4. Transportvorrichtung nach Anspruch 2 oder 3, **dadurch gekennzeichnet, dass** die passive Klemmbacke (11) eine schräge Klemmfläche (17) aufweist.

5. Transportvorrichtung nach einem der Ansprüche 1 bis 4, **dadurch gekennzeichnet, dass** die Klemmbacken, z.B. die aktive Klemmbacke (10), eine oder mehrere Halteschwingen (18) aufweisen, die schwenkbar gelagert und an die Klemmzylinderantriebe (12) angeschlossen sind.

6. Transportvorrichtung nach Anspruch 5, **dadurch gekennzeichnet, dass** die Halteschwingen (18) jeweils Kulissenführen (20), z.B. Langlochführungen, aufweisen.

7. Transportvorrichtung nach einem der Ansprüche 1 bis 6, **dadurch gekennzeichnet, dass** die Klemmzylinderantriebe (12) als doppelt wirkende Differenzialzylinder ausgebildet sind.

8. Transportvorrichtung nach einem der Ansprüche 1 bis 7, **dadurch gekennzeichnet, dass** die Hydraulikzuführungen (23, 24) für die Klemmantriebe (12) als Bohrungen ausgebildet sind.

9. Transportvorrichtung nach einem der Ansprüche 1 bis 8, **dadurch gekennzeichnet, dass** der Querantrieb (15) als elektromechanischer Antrieb ausgebildet ist.

10. Transportvorrichtung nach einem der Ansprüche 1 bis 9, **dadurch gekennzeichnet, dass** der Querantrieb als entlang der Transportrichtung (T) arbeitender Linearantrieb ausgebildet ist, welcher über ein Hebelgetriebe (22) in Querrichtung auf die Traglenker (8) arbeitet.

11. Transportvorrichtung nach einem der Ansprüche 1 bis 10, **dadurch gekennzeichnet, dass** mit den Querantrieben (15) im Zuge des Auseinanderfahrens der Klemmeinrichtungen (9) auf den Pressgutstapel oder die Pressplatte eine ausreichende Zugkraft zur Vermeidung eines Durchhangs aufbringbar ist.

12. Transportvorrichtung nach einem der Ansprüche 1 bis 11, **dadurch gekennzeichnet, dass** die Klemmleiste (13) aus Stahl gefertigt ist und durch spanabhebende Bearbeitung mit die Steifigkeit erhöhenden Profilierungen und/oder Ausnehmungen ausgebildet ist.

## Claims

1. Transporting device (2) for loading and/or emptying a plate press (1) with a press material stack (5) to be pressed or with a pressed press plate
with transporting bars displaceable on guide rails (6) in the transporting direction (T), between which a press material stack or a press plate is or can be positioned, and
clamping devices (9) fastened to the transporting bars (7) by way of support arms (8),
wherein the clamping devices (9) each have two clamping jaws (10, 11) which can be moved together by means of a clamping drive (12) in order to grip a press material stack or a press plate,
wherein clamping devices (9), arranged on both sides of the press material stack, with the support arms (8) and connected transverse drives (15) can be moved together to pick up the press material stack or the press plate and moved apart for clamping the press material stack or the press plate transversely to the transporting direction, and
wherein several clamping devices (9) are arranged on a clamping bar (13) which extends along the transporting device (T) and is connected to the support arms (8), **characterised in that** the clamping drives (12) are designed as hydraulic clamping cylinder drives (12) and **in that** hydraulic supply lines (23, 24) are integrated into the clamping bar (13).

2. Transporting device according to claim 1 **characterised in that** the clamping devices (9) each comprise an active clamping jaw (10) movably articulated on the clamping bar (12) and operated by the clamping cylinder drives (12) and a passive clamping jaw (11) fastened on the clamping bar (13).

3. Transporting device according to claim 2 **characterised in that** the active clamping jaw (10) comprises a rotatably borne clamping roller (16).

4. Transporting device according to claim 2 or 3 **characterised in that** the passive clamping jaw (11) comprises an oblique clamping surface (17).

5. Transporting device according to any one of claims 1 to 4 **characterised in that** the clamping jaws, e.g. the active clamping jaw (10), comprises one or more holding rockers (18) which are pivotably borne and connected to the clamping cylinder drives (12).

6. Transporting device according to claim 5 **characterised in that** the holding rockers (18) each comprise slotted guides (20), e.g. elongated hole guides.

7. Transporting device according to any one of claims 1 to 6 **characterised in that** the clamping cylinder drives (12) are configured as double-acting differential cylinders.

8. Transporting device according to any one of claims 1 to 7 **characterised in that** the hydraulic supply lines (23, 24) for the clamping devices (12) are in the form of drilled holes.

9. Transporting device according to any one of claims 1 to 8 **characterised in that** the transverse drive (15) is designed as an electromechanic drive.

10. Transporting device according to any one of claims 1 to 9 **characterised in that** the transverse drive is configured as a linear drive operating along the transporting direction (T), which acts in the transverse direction on the support arms (8) via a lever gear (22).

11. Transporting device according to any one of claims 1 to 10 **characterised in that** with the transverse drives (15) during the course of moving the clamping devices (9) apart a sufficient tensile force can be applied to the press material stack or the press plate in order to avoid sagging.

12. Transport device according to any one of claims 1 to 11 **characterised in that** the clamping bar (13) is made of steel and through machining is provided with profiling and/or recesses that increase rigidity.

## Revendications

1. Dispositif de transport (2) pour alimenter et/ou vider une presse à plateaux (1) avec une pile de matériaux de pressage à presser (5) ou un plateau de pressage pressé, avec des montants de transport pouvant se déplacer sur des rails de guidage (6) dans la direction de transport (T), entre lesquels une pile de matériaux à presser ou un plateau de pressage est positionné ou peut être positionné, et
avec un dispositif de serrage (9) fixé sur les montants de transport (7) par le biais de bras oscillants de support (8),
sachant que le dispositif de serrage (9) comporte respectivement deux mâchoires de serrage (10, 11) qui peuvent être rapprochées au moyen d'un entraînement de serrage (12) pour saisir une pile de matériaux à presser ou un plateau de pressage,
sachant que les dispositifs de serrage (9) disposés des deux côtés de la pile de matériaux à presser ou du plateau de pressage peuvent être rapprochés avec les bras oscillants de support (8) et les entraînements transversaux (15) qui y sont raccordés pour recevoir la pile de matériaux à presser ou le plateau de pressage et peuvent être écartés transversalement à la direction de transport pour serrer la pile de matériaux à presser ou le plateau de pressage, et
sachant que respectivement plusieurs dispositifs de serrage (9) sont disposés sur un liteau de serrage (13), lequel s'étend le long de la direction de transport (T) et est raccordé aux bras oscillants de support (8), **caractérisé en ce que** les entraînements de serrage (12) sont constitués comme des entraînements à vérin de serrage (12) et, **en ce que** des systèmes d'alimentation hydrauliques (23, 24) pour les entraînements de serrage (12) sont intégrés dans le liteau de serrage (13).

2. Dispositif de transport selon la revendication 1, **caractérisé en ce que** les systèmes de serrage (9) comportent respectivement une mâchoire de serrage (10) articulée de façon mobile sur le liteau de serrage (13) et active pouvant être actionnée par des entraînements à vérin de serrage (12) et une mâchoire de serrage (11) passive fixée sur le liteau de serrage (13).

3. Dispositif de transport selon la revendication 2, **caractérisé en ce que** la mâchoire de serrage active (10) comporte un rouleau de serrage (16) logé pouvant tourner.

4. Dispositif de transport selon la revendication 2 ou 3, **caractérisé en ce que** la mâchoire de serrage passive (11) comporte une surface de serrage inclinée (17).

5. Dispositif de transport selon l'une quelconque des revendications 1 à 4, **caractérisé en ce que** les mâchoires de serrage, par ex. : la mâchoire de serrage active (10), comportent un ou plusieurs bras oscillants de maintien (18), qui sont logés pouvant pivoter et sont raccordés aux entraînements à vérin de serrage (12) .

6. Dispositif de transport selon la revendication 5, **caractérisé en ce que** les bras oscillants de maintien (18) comportent respectivement des guides à coulisse (20), par ex.: guidages à trou oblong.

7. Dispositif de transport selon l'une quelconque des revendications 1 à 6, **caractérisé en ce que** les entraînements à vérin de serrage (12) sont constitués comme des vérins différentiels à double effet.

8. Dispositif de transport selon l'une quelconque des revendications 1 à 7, **caractérisé en ce que** les systèmes d'alimentation hydrauliques (23, 24) pour les entraînements de serrage (12) sont constitués comme des trous.

9. Dispositif de transport selon l'une quelconque des revendications 1 à 8, **caractérisé en ce que** l'entraînement transversal (15) est constitué comme un entraînement électromécanique.

10. Dispositif de transport selon l'une quelconque des revendications 1 à 9, **caractérisé en ce que** l'entraînement transversal est constitué comme un entraînement linéaire fonctionnant le long de la direction de transport (T), lequel fonctionne par le biais d'un mécanisme à leviers (22) dans la direction transversale du bras oscillant de support (8).

11. Dispositif de transport selon l'une quelconque des revendications 1 à 10, **caractérisé en ce qu'**une force de traction suffisante pour éviter un fléchissement peut être appliquée sur la pile de matériaux à presser ou le plateau de pressage avec les entraînements transversaux (15) au cours de l'écartement des systèmes de serrage (9).

12. Dispositif de transport selon l'une quelconque des revendications 1 à 11, **caractérisé en ce que** le liteau de serrage (13) est fabriqué en acier et est constitué par usinage par enlèvement de copeaux avec des profilages et/ou des évidements augmentant la rigidité.
